# EUROPÄISCHE PATENTSCHRIFT

(11) **EP 2 043 963 B1**
(45) Veröffentlichungstag und Bekanntmachung des Hinweises auf die Patenterteilung: **07.05.2014**
(21) Anmeldenummer: 07763742.9
(22) Anmeldetag: 09.07.2007
(51) Int. Cl.: C04B 111/00, C04B 111/28, C04B 28/30, C04B 28/34

(54) **TÜREN, TORE UND ZARGEN WELCHE EIN HÄRTENDES PRODUKT AUF DER BASIS VON ANORGANISCHEN VERBINDUNGEN ENTHALTEN**
DOORS, GATES AND FRAMES THAT CONTAIN A CURING PRODUCT BASED ON INORGANIC COMPOUNDS
PORTES ET CHARPENTES CONTENANT UN PRODUIT DURCISSANT À BASE DE COMPOSÉS INORGANIQUES

(30) Priorität: 12.07.2006 AT 11802006; 26.09.2006 AT 16022006
(43) Veröffentlichungstag der Anmeldung: 08.04.2009
(73) Patentinhaber: Domoferm International GmbH, 2230 Gänserndorf (AT)
(72) Erfinder: LECHNER, Richard, A-2344 Maria Enzersdorf (AT); LECHNER, Martin, A-1220 Wien (AT)
(74) Vertreter: Patentanwälte Barger, Piso & Partner
(86) Internationale Anmeldenummer: PCT/AT2007/000344
(87) Internationale Veröffentlichungsnummer: WO 2008/006124

(56) Entgegenhaltungen:
- US-A- 2 692 219
- US-A- 2 703 762
- US-A- 2 919 202

## Beschreibung

Die Erfindung betrifft Türen, Tore und Zargen mit Hohlräumen, nach Anspruch 1. Als am nächstkommende Formmassen an sich können die in den US 2 703 762 A und US 2 692 219 A vorgeschlagenen Produkte genannt werden, die, so wie alle anderen vorbekannten Produkte, in eigenen Formen hergestellt und im ausgehärteten Zustand montiert werden.

Es soll schon einleitend festgestellt werden, dass die Begriffe "günstige feuerbeständige, wärmeisolierende und schallisolierende Eigenschaften" nicht im Sinne irgendwelcher Normen sondern im technisch-umgangssprachlichen Sinn zur Abgrenzung gegenüber nicht so günstigen Eigenschaften zu verstehen sind. Es wird darauf hingewiesen, dass alle Prozentangaben in der Beschreibung und den Ansprüchen, sofern nichts anderes angegeben ist, Gewichtsprozente sind.

### Stand der Technik:

Ein solches Produkt auf der Basis einer anorganischen Formmasse ist aus den oben genannten US 2 703 762 A und US 2 692 219 A bekannt. Dabei wird insbesondere eine Mischung von pulverförmigen Magnesiumsulfat-Heptahydrat und Magnesiumoxid geoffenbart, die durchgemischt wird, in Formen geleert wird und unter erhöhtem Druck (ca. 69 bis 415 bar) und bei erhöhter Temperatur (ca. 71°C bis 93°C) je nach Dicke für ca. eine bis 10 Minuten ausgehärtet wird. Dabei wird das Kristallwasser des Sulfats frei und sorgt für die Verflüssigung der Mischung, die erst dann die Form genau ausfüllt und beim Abbinden zu einem festen Gegenstand wird. Das Kristallwasser verdampft und das erhaltene Produkt weist keines mehr auf.

Die US 4 432 799 A beschreibt eine härtbare Masse, bei der die bindende Phase aus Aluminiumphosphat mit Magnesiumoxid besteht. Bei der entstehenden Verbindung zeigt sich in hohem Maße das Problem der mangelnden Feuerwiderstandsdauer.

Die US 5 888 292 A ist der erstgenannten Druckschrift ähnlich, doch besteht hier die bindende Phase aus Kalziumphosphat mit Kalziumoxid. Bei der entstehenden Verbindung zeigt sich in hohem Maße das Problem der mangelnden Feuerwiderstandsdauer.

Die Database WPI Week 199716, XP002411982 und die CN 1 092 051 A schlagen die Verwendung von Sorelzement (Magnesiumoxid mit Magnesiumchlorid) vor, was im Brandfall HCl freisetzt, was aber unbedingt vermieden werden muss.

Die Database WPI Week 200268, XP002411983 und die CN 1 358 684 A schlagen die Verwendung von Magnesiumoxid in einem Konzentrationsbereich zwischen 3 und 40% vor, dazu kommen organische Füllstoffe, die im Brandfall selbst zu brennen beginnen können. Ebenfalls eingesetzt wird Magnesiumsulfat, doch nicht als Komponente des Bindemittels.

Die US 2 919 202 A weist eine bindende Phase aus einer Kombination von Vermiculit, Phosphorsäure und Schwefelsäure auf, wobei auch mit dem optional eingesetzten Magnesiumsulfatheptahydrat die notwendige Feuerwiderstandsdauer nicht erreicht wird.

Die GB 1 311 198 A schlägt Aluminiumphosphat und Magnesiumoxid zur Bildung der bindenden Phase vor. Bei der entstehenden Verbindung zeigt sich in hohem Maße das Problem der mangelnden Feuerwiderstandsdauer.

Die nachveröffentlichte österreichische Patentanmeldung A 2185/2004, entsprechend der WO 2006/069411 A betrifft eine Formmasse bestehend aus mit Überzugsmasse überzogenen Partikeln und deren Verwendung zur Herstellung von feuerbeständigen Formkörpern, wobei die Hohlräume zwischen den Partikeln ausgeschäumt werden. Der in dieser Druckschrift beschriebene Gegenstand beruht ausschließlich darauf, dass die reagierende Masse einen anorganischen Schaum bildet.

Die WO 9633866 A beschreibt einen feuerfesten Silikat-Oxisulfat-Zement auf der Basis von Magnesiumsulfat, Magnesiumoxid und Wasserglas.

Die DE 10144820 A1 betrifft ein Brandschutzelement, ein Verfahren zu dessen Herstellung und ein brandschutzgesichertes Rahmenwerk für einen Gebäudeteil, beispielsweise eine Gebäudefassade oder dgl. Die verwendete Masse beinhaltet zwingend MgCl₂ wodurch im Brandfall die HCl-Bildung unvermeidlich ist.

Die DE 2522515 A offenbart eine Masse mit Magnesiumoxidzement auf Sulfatbasis, die mit verschiedenen Fasern zur Herstellung von Platten verwendet werden.

Chvatal, T. beschreibt in seinem Aufsatz "Stand der feuerfesten Phosphatbindung" im Sprechsaal 1975 S. 576-589; die Bedeutung der Phosphatbindung für den Einsatz von gebrannten Massen in Hochtemperatur-Feuerfestmaterialien.

Solche Füllmaterialien werden in Plattenform, als lose Schüttung oder als schäumende Füllmasse verwendet. Bekannt sind Faservliese, Gipsplatten, Schichten auf der Basis von gehärtetem Wasserglas, Schaummassen auf der Basis der Reaktionsprodukte von Aluminiumphosphat mit Metalloxiden und Metallkarbonaten sowie deren Kombinationen.

Allen den in den genannten Dokumenten beschriebenen Zusammensetzungen, Gegenständen und Verfahren haften Nachteile an: Entweder es werden im Brandfall aggressive und/oder gesundheitsschädliche Dämpfe bzw. Gase freigesetzt oder es kommt zu alterungsbedingten nachteiligen Veränderungen während der Verwendung, oder die Herstellung ist teuer, oder die Wirkung ist (gegenüber den Gas abgebenden Massen) eingeschränkt, etc.. Es besteht somit ein Bedarf an einer Masse der eingangs genannten Art auf der Basis einer anorganischen Formmasse, die diese Nachteile nicht aufweist.

### Aufgabe der Erfindung

Es ist Aufgabe der Erfindung, zum Füllen der eingangs genannten Hohlräume eine Masse anzugeben, die diese Nachteile nicht aufweist und insbesondere im Brandfall keine aggressiven und/oder gesundheitsschädlichen Dämpfe bzw. Gase freisetzt, eine Masse, die über lange Zeiträume stabil ist, die sich einfach in die Hohlräume einbringen lässt und die letztlich auch kostengünstig herzustellen ist.

Erfindungsgemäß werden die genannten Nachteile dadurch vermieden und die genannten Ziele dadurch erreicht, dass entsprechend dem Anspruch 1 die Hohlräume der Türen, Tore und Zargen mit einer härtenden, anorganischen bindenden Phase, enthaltend Magnesiumsulfat-Heptahydrat und Magnesiumoxid im Molverhältnis zwischen zumindest 0,7 und 1,2 gefüllt werden. Durch diese Merkmale erhält man eine stabile, leicht in die Hohlräume einzubringende und kostengünstige Füllung der Hohlräume. Das Magnesiumsulfat-Heptahydrat (Bittersalz, MgSO₄.7H₂O; Molgewicht 246,51) und Magnesiumoxid (MgO; Molgewicht 40,32) liegen dabei in einem Gewichtsverhältnis von 4,28 bis 7,3 vor.

In einer Ausgestaltung ist vorgesehen, dass das Molverhältnis Magnesiumsulfat-Heptahydrat/Magnesiumoxid zwischen 0,7 und etwa 1 liegt; dem entspricht ein Gewichtsverhältnis von 4,28 bis 6,2. So wird die Volumenstabilität besonders günstig.

In einer weiteren Ausgestaltung ist vorgesehen, dass die bindende Phase zu 10-80 Gew.-% aus Magnesiumsulfat, zu 3-40 Gew.-% aus Magnesiumoxid, zu bis zu 10 Gew.-% aus Phosphorsäure, zu 3-50 Gew.-% aus anorganischen Füllstoffen, zu 3-60 Gew.-% aus Wasser, der Rest, sofern vorhanden, aus anorganischen Teilchen, besteht. Damit wird der Wasseranteil weiter erhöht, ohne dass die Stabilität leidet.

In einer anderen Ausgestaltung ist vorgesehen, dass der bindenden Phase als Härter Oxide und/oder Hydroxide von zwei oder dreiwertigen Metallionen zugesetzt werden. Diese Härter beeinflussen durch ihren basischen oder amphoteren Charakter Reaktionszeit und Eigenschaften der Massen im Brandfall. Weitere Kennzeichen der als Härter Verwendung findenden Materialien sind ihre Struktur, Brenngrad und spezifische Oberfläche. Der Brenngrad, d.h. die Brenntemperatur, beeinflusst die Reaktivität, hochgebrannte Oxide sind reaktionsträger als niedriggebrannte, wobei aber kein linearer Zusammenhang besteht. Mit steigender spezifischer Oberfläche erhöht sich die Reaktionsgeschwindigkeit zwischen den beiden Bindemittelanteilen

In einer wieder anderen Ausgestaltung ist vorgesehen, dass die bindende Phase als Füllstoff Kaolin, Kreide, Schiefermehl, Glimmer, Quarz und Ton oder Mischungen davon zwischen 3 und 15 Gew.-% aufweist. Damit kann die Dichte beeinflusst werden.

Die Masse besteht in Ausgestaltungen somit, mit der Maßgabe, dass sie Magnesiumsulfat-Heptahydrat und Magnesiumoxid im Molverhältnis zwischen zumindest 0,7 und 1,2 enthält, die auch einen Härter, der aus der Gruppe der Oxide und Hydroxide von zwei- oder dreiwertigen Metallionen oder Mischungen davon ausgewählt ist, aufweist, wobei schließlich die bindende Phase auch chemisch gebundenes Wasser enthält.

Eine solche Masse reagiert im Brandfall durch die auftretende Erwärmung und weist durch die Anwesenheit des dann frei werdenden, bis dahin chemisch gebundenen Wassers eine hervorragende Feuerbeständigkeit auf. Durch die chemische Bindung des Wassers ist wiederum die Lagerfähigkeit (darunter ist auch der eingebaute Betriebszustand während des "Wartens" auf einen Brand zu verstehen) hervorragend und mit der Lagerfähigkeit einer Zusammensetzung, in der Wasser nur physikalisch gebunden ist, nicht zu vergleichen.

### Detaillierte Beschreibung der Erfindung

Die Erfindung betrifft somit, Türen, Toren, Zargen mit Hohlräumen immer mit der Maßgabe, dass sie Magnesiumsulfat-Heptahydrat und Magnesiumoxid im Molverhältnis zwischen zumindest 0,7 und 1,2 enthält, und Oxide und/oder Hydroxide von zwei oder dreiwertigen Metallionen als zweiten Reaktionspartner, sowie Salze mit chemisch gebundenem Wasser, anorganischen Füllstoffen wie Kaolin, Kreide, Schiefermehl, Glimmer, Quarz, Tone, anorganischen Teilchen wie Hohlkugeln, Glaskugeln, Korundhohlkugeln, Blähton, Blähglas, Blähschiefer, Perlte, Blähglimmer, Vermiculit, vulkanische Gesteine, Tuff, Korund, Schamotte, Molochite, Sepiolithe oder deren Kombinationen und Wasser.

Hier ist festzuhalten, dass die mineralischen Bestandteile, insbesondere Schiefer, organisches Material im Ausmaß von weniger als 1 Gewichtsprozent enthalten können. Wegen dessen feinster Verteilung innerhalb des Minerals stellt es aber, im Gegensatz zur teilweise üblichen Beimischung (Database WPI Week 200268, XP002411983 und CN 1 358 684 A), im Brandfall kein Problem dar.

Dieses Hüllmaterial wird in Hohlräumen von Türen, Toren, Zargen und sonstigen Formteilen als Feuerschutzelement eingesetzt und verbessert dabei gegebenenfalls auch die Lärmschutz- und Wärmedämmeigenschaften.

Die Erfindung schafft Türen, Tore, Zargen, bei denen die Gefahren und Nachteile der bekannten Massen, wie ungenügende Feuerwiderstandsdauer aufgrund Überschreitung der Maximaltemperatur an der Kaltseite und/oder Flammenbildung durch entstehende brennbare Gase vermeidet. Darüber hinaus wird der bei den bekannten Brandschutzelementen häufig beobachtete Verlust der mechanischen Festigkeit bei thermischer Belastung und die Verringerung der Feuerwiderstandsdauer mit fortschreitendem Alter des Brandschutzelementes durch teilweisen Verlust des für die Kühlwirkung verantwortlichen Wassers vermieden. Durch die Vermeidung der Verwendung von Chloriden wird das Entstehen stark saurer Gase (HCl) im Brandfall, die unter anderem die Metallkörper der Formteile angreifen und die Stabilität herabsetzen, vollständig verhindert.

Die Türen, Tore, Zargen mit Hohlräumen gefüllt mit dem erfindungsgemäßen verwendbaren Füllmaterial haben den Vorteil, dass das Füllmaterial nicht brennbar ist, da ausschließlich anorganische, nicht brennbare Komponenten verwendet werden, die auch bei starker Erhitzung keine brennbaren Substanzen freisetzen.

Durch die den verwendeten Massen eigenen Eigenschaften wird es möglich, einen hohen Anteil an chemisch gebundenem Wasser als Kühlmittel vorzusehen, was zu einer hohen Feuerbeständigkeit führt. Da das enthaltene Wasser als Kristallwasser chemisch gebunden vorliegt, ist gewährleistet, dass auch bei längerer Lagerung kein Wasserverlust auftritt und dadurch die Feuerwiderstandsdauer voll erhalten bleibt. Darüber hinaus weist dieses Füllmaterial eine hohe mechanische Stabilität bei thermischer Belastung bis über 1100°C auf. Der Grund dafür ist nach derzeitigem Wissensstand, dass die kristallinen Strukturen auch bei hohen Temperaturen trotz der dabei erfolgenden Wasserabgabe erhalten bleiben, bzw. neue stabile Strukturen gebildet werden.

### Beschreibung der Komponenten und deren Wirkungsweise in Abhängigkeit von der Konzentration:

Das Füllmaterial besteht grundsätzlich aus der bindenden Phase, die stets Magnesiumsulfat-Heptahydrat und Magnesiumoxid im Molverhältnis zwischen zumindest 0,7 und 1,2 enthält, weiters aus Salzen mit chemisch gebundenem Wasser, anorganischen Füllstoffen, anorganischen Teilchen und Wasser. Bei den im Folgenden angegebenen möglichen Bestandteilen und deren Kombinationen ist erfindungsgemäß stets Voraussetzung, dass die bindende Phase Magnesiumsulfat-Heptahydrat und Magnesiumoxid im Molverhältnis zwischen zumindest 0,7 und 1,2 enthält.

### Bindende Phase:

Die bindende Phase ist jener Anteil der erfindungsgemäß verwendeten Zusammensetzung, der im abreagierten Zustand die mechanische Festigkeit und die Formstabilität auch im Brandfall gewährleistet und setzt sich aus einem sauren und einem alkalischen Anteil zusammen.

Als alkalischer Anteil (Härter) werden eingesetzt
- Oxide der Metalle wie Magnesium, Kalzium und Zink
- Hydroxide der Metalle wie Magnesium, Kalzium und Zink
wobei die Einsatzmenge des alkalischen Anteils nicht notwendigerweise in einem stöchiometrischen Verhältnis zur sauren Komponente steht.

Der Anteil der bindenden Phase beeinflusst direkt die mechanische Stabilität auch bei thermischer Belastung und bringt einen wesentlichen Beitrag zur Feuerwiderstandsdauer durch das chemisch gebundene Kristallwasser.

### Salze mit chemisch gebundenem Wasser:

Im Stand der Technik ist es eine der möglichen Maßnahmen zum Erreichen hoher Feuerbeständigkeiten, in die Hohlräume eine bestimmte Wassermenge einzubringen und dort physikalisch festzuhalten, die später, bei Temperaturbelastung, als Kühlwasser fungiert.

Es wird Wasser durch das Bindemittel chemisch gebunden. Um höhere Feuerbeständigkeit zu erreichen, wird bevorzugt zusätzliches chemisch gebundenes Wasser (aber nicht in der bindenden Phase gebundenes Wasser) in Form von Hydraten wie Sulfate der Metalle Aluminium, Calcium, Magnesium, Mangan, Zink sowie Magnesium- und Calcium-Phosphate und Hydroxide der Metalle Aluminium, Calcium, Magnesium zugesetzt. Dadurch ist die gesamte enthaltene Wassermenge chemisch gebunden (außer Restmengen von Anmachwasser), was zur Folge hat, dass die Feuerwiderstandsdauer bei Lagerung oder täglichem Gebrauch keine Veränderung erfährt. Die Untersuchungen haben gezeigt, dass bei gleich bleibender Art der bindenden Phase ein näherungsweise linearer Zusammenhang zwischen gebundenem Wasser und Feuerwiderstandsdauer besteht.

### Anorganische Füllstoffe:

Mit dem Einsatz von anorganischen Füllstoffen werden zwei Ziele verfolgt. Einerseits erreicht man damit eine Verbilligung des Gemisches und andererseits sind Füllstoffe meist notwendig, um die Härte und Elastizität einzustellen (d.h. auf die gewünschten Werte zu bringen) sowie die ev. Tendenz zu Rissbildung zu verhindern. Die Einsatzmenge bewegt sich im Bereich 3 bis 50% abhängig von der Art des Füllstoffes, seiner Ölzahl und der Art der bindenden Phase. Die untere Grenze beträgt mindestens 3% und ergibt sich für den jeweiligen Füllstoff aus der Wirkungsweise auf die Rissbildung. Die obere Grenzkonzentration ist erreicht, wenn die Festigkeit der bindenden Phase verloren geht oder durch die hohe Viskosität die Verarbeitung nicht mehr möglich ist. Als Füllstoffe kommen Kaolin, Kreide, Schiefermehl, Glimmer, Quarz und Tone in Frage. Zum Beispiel liegen die Grenzen im Fall von Plastorit 0.25 zwischen 3 und 15%. Bei höherer Einsatzmenge steigt die Viskosität in einen Bereich, wo eine Verarbeitung nicht mehr möglich ist.

### Anorganische Teilchen:

Um geringere Dichte zu erreichen, werden bevorzugt anorganische Teilchen zugesetzt. Damit kann unter Beibehaltung der hohen Feuerbeständigkeit die Dichte bis auf minimal 0,30 g/cm³ herabgesetzt werden. Die Einsatzmenge kann sich im Konzentrationsbereich von 0 bis 80 %, bezogen auf das Gesamtgewicht (somit mit 100 % bis 20 % härtender Masse), bewegen, wobei nach oben die mechanische Belastbarkeit abnimmt. Abhängig von den Verarbeitungsbedingungen können Korngrößen von 0,1 bis 16 mm zum Einsatz kommen. Als anorganische Teilchen kommen Hohlkugeln, Glaskugeln, Korundhohlkugeln, Blähton, Blähglas, Blähschiefer, Perlte, Blähglimmer, Vermiculit, vulkanische Gesteine, Tuff, Korund, Schamotte, Molochite, Sepiolithe oder deren Kombinationen in Frage.

### Wasser:

Das Wasser wird einerseits als Reaktionspartner für die bindende Phase und andererseits zur Beeinflussung der Verarbeitungsviskosität benötigt. Die Wassermenge wird so gewählt, dass über die Verarbeitungsdauer die Viskosität nicht über einen Wert von 50.000 mPa.s (Brookfield RVT, Spindel 6/20 min⁻¹) steigt.

### Beispiele

### Vergleichs-Beispiel 1:

In einen Mischer werden 8,7 g Wasser mit 0,4 g Phosphorsäure 75 Gew.-% vorgelegt. Dazu kommen 52 g Magnesiumsulfat-Heptahydrat MgSO₄.7H₂O, 8,7 g Schiefermehl und 13 g Magnesiumoxid. Dieser Ansatz wird 15 Minuten bei schnell laufendem Rührcr homogenisiert. Anschließend wird unter langsamem Rühren 17,2 g Blähglas der Körnung 2-4 mm zugegeben. Diese Mischung ist dann innerhalb von 4 Stunden verarbeitbar. Solche Massen führen bei flächiger Anwendung, beispielsweise bei Türen, bei einer Schichtstärke von 27 mm in Kombination mit zwei 18 mm starken Steinwollplatten zu einer Feuerbeständigkeitsdauer von über 120 Minuten. Dabei wird mit dieser Kombination ein Flächengewicht von 32,8 kg/m² erreicht.

### Vergleichs-Beispiel 2:

In 21,5 g Wasser, das mit 0,1 g Phosphorsäure 75 Gew.-% versetzt wurde, werden 2,5 g Plastorit 0.25 eingerührt. Anschließend werden 23,1 g Trimagnesiumphosphat (Mg₃(PO₄)₂.8H₂O) und 3 g Magnesiumoxid eindispergiert. Schließlich rührt man langsam 49,8 g Blähton der Körnung 12-20 mm dazu.

Diese Mischung wird direkt zu Platten verarbeitet, durch den Einsatz des Blähtons werden die Kosten und die Dichte reduziert, ohne der Feuerbeständigkeit zu schaden. Bei einer Schichtstärke von 63 mm beträgt das Flächengewicht 44 kg/m².

### Vergleichs-Beispiel 3:

10,7 g Wasser werden mit 1 g Phosphorsäure 75% und 39 g Magnesiumsulfat-Heptahydrat versetzt. 13,8 g Magnesiumhydroxid Mg(OH)₂ und 10,1 g Schiefermehl wird vorgemischt und dann zur wässrigen Phase eingerührt. Diese Mischung wird mit 21,5 g Blähglas der Körnung 8/16 und 4,9 g Magnesiumsulfat-anhydrid MgSO₄ homogen vermischt.

Mit dieser Zusammensetzung wird bei niedrigem Flächengewicht (33 kg/m²) eine Feuerbeständigkeitsdauer von über 120 Minuten erzielt.

### Erfindungsgemäßes Beispiel 4:

145g Wasser werden mit 355g Magnesiumsulfat-Heptahydrat versetzt und mit 58g Magnesiumoxid homogen vermischt.

Mit dieser Zusammensetzung wird nicht nur eine feuerfeste Masse sondern insbesondere auch ein feuerfester Kleber zum Verbinden von Stahloberflächen, behandelt oder unbehandelt, mit Feuerfestmaterialien gewonnen.

### Weitere Beispiele:

### ZUSAMMENSETZUNG

| | ML508-1 Vergl. | ML508-3 erf. | ML508-6 Vergl. | ML551-4 Vergl. | ML551-11 erf. | ML551-13 Vergl. | ML551-2 Vergl. |
|---|---|---|---|---|---|---|---|
| Wasser | 12 | 12 | 12 | 11,63 | 10,73 | 10,20 | 12,00 |
| Phosphorsäure 75% | 0,58 | 0,58 | 0,58 | 0,56 | 0,61 | 0,60 | 0,60 |
| Mg(SO)₄·7H₂O | 66 | 60 | 51 | 63,98 | 65,17 | 62,00 | 65,90 |
| Schiefermehl | 9,43 | 9,43 | 9,43 | 9,14 | 10,21 | 9,70 | 9,40 |
| MgO | 6,66 | 12,66 | 21,66 | 6,45 | 13,28 | 17,50 | 6,60 |
| Mg(SO)₄ | 5,33 | 5,33 | 5,33 | 8,24 | 0,00 | 0,00 | 5,50 |
| Summe | 100 | 100 | 100 | 100 | 100 | 100 | 100 |

### WERTE

| | ML508-1 | ML508-3 | ML508-6 | ML551-4 | ML551-13 |
|---|---|---|---|---|---|
| Bindemittelanteil [%] | 72,7 | 72,7 | 72,7 | 72,7 | 81 |
| Molverhältnis | 1,89 | 0,92 | 0,47 | 2,05 | 0,58 |
| Wassergehalt [%] | 45,7 | 42,7 | 38 | 45,7 | 43,1 |
| Härte [Pa] | 60 | 104 | 27 | 8 | zerfällt |
| Volumsänderung [%] | -0,4 | 15 | 96 | 6,4 | zerfällt |

| | ML551-11 | | ML551-2 | |
|---|---|---|---|---|
| Zeit bis Volumen stabil | 2 Tage | 23 Tage | 2 Tage | 31 Tage |
| Bindemittelanteil [%] | 76 | | 72,7 | |
| Molverhältnis | 0,8 | | 1,9 | |
| Wassergehalt [%] | 43,1 | | 45,7 | |
| Härte [Pa] | 159 | 155 | 70 | 30 |
| Volumsänderung [%] | 0,3 | 1 | 0 | 9,3 |

Erfindungsgemäßes Beispiel ML551-11: In diesen Bereichen des Molverhältnisses ist die Reaktionsgeschwindigkeit mit den Zuschlagsstoffen wie Phosphorsäure bzw. den Füllstoffen so steuerbar, dass eine gute Verarbeitbarkeit gesichert wird. Darüber hinaus erreicht man die höchste Härte und die höchste Stabilität des Volumens während und nach der Härtung (nur 1 % Volumsänderung nach 23 Tagen!)

### Vergleichs-Beispiele ML508-6, ML551-13: Molverhältnis unter 0,7:

Soweit Verarbeitbarkeit noch gegeben ist, beobachtet man abhängig von Art und Konzentration der Zuschlagstoffe eine Volumsänderung während der Aushärtung. Dies passiert in der Art, dass der Körper zunächst eine gewisse Härte erreicht und abhängig von den Zuschlagstoffen und den Härtungsbedingungen zunächst eine Schrumpfphase durchläuft oder eine leichte Volumszunahme beobachtet wird. Dieser Zustand bleibt dann für Tage stabil, um dann eine starke Volumsausdehnung zu entwickeln. Beobachtet wurden Volumsvergrößerungen bis zum Doppelten. Diese Ausdehnung des harten Körpers klingt erst nach Wochen ab. Damit ist gleichzeitig eine Abnahme der Härte verbunden. Abgesehen von der mangelnden Härte ist auf diese Art die maßgenaue Herstellung von Körpern unmöglich. Meistens konnte die Messungen nicht durchgeführt werden, weil kein kompakter Körper herstellbar war - entweder zerfällt der Block nach dem Start der Reaktion (Exotherme) oder nach Tagen während der Phase der starken Ausdehnung.

### Vergleichs-Beispiele ML508-1, ML551-2, ML551-4: Molverhältnis über 1.2:

Hier konnte in jedem Fall eine ausreichende Verarbeitbarkeit erzielt werden. Bis zu drei Tage nach der Härtung sind Härte und Volumen noch in Ordnung. Ab drei Tage nach der Härtung setzt in jedem Fall eine Volumszunahme ein. Diese Phase dauert bis zu 8 Wochen, wobei das Volumen um bis zu 25% erhöht wurde. Parallel dazu sinkt die Härte auf unter 50% des Ausgangswertes.

Weitere Einflüsse für das Erreichen einer optimalen Binderphase sind:

### Erfindungsgemäßes Beispiel ML508-3: Magnesiumoxid:

Die Struktur des Magnesiumoxides (MgO) beeinflusst die Qualitätskriterien der bindenden Phase wie Reaktionsgeschwindigkeit, Verarbeitbarkeit, Härte des Fertigproduktes und Konstanz des Volumens während der Aushärtung. Diese Strukturunterschiede sind durch Brenngrad, Korngröße und Korngrößenverteilung erklärt.

### Wassergehalt:

Die optimale Menge an Anmachwasser setzt sich aus der Menge, die zur Bildung der Binderphase notwendig ist und einem Mengenanteil abhängig von der Ölzahl der Zuschlagsstoffe zusammen.

Eine Abweichung nach unten bewirkt ein Zerfallen der Strukturen während der Reaktion. Ein Überschreiten führt unter anderem zu extremer Volumsausdehnung, es ist in Kenntnis der Erfindung für den Fachmann leicht möglich, anhand einiger weniger Versuche die für sein Anwendungsgebiet optimale Menge zu finden.

## Patentansprüche

1. Türen, Toren, Zargen mit Hohlräumen, die mit einer härtenden, anorganischen bindenden Phase, enthaltend Magnesiumsulfat-Heptahydrat und Magnesiumoxid im Molverhältnis zwischen zumindest 0,7 und 1,2 gefüllt werden.

2. Türen, Toren, Zargen nach Anspruch 1, **dadurch gekennzeichnet, dass** das Molverhältnis Magnesiumsulfat-Heptahydrat/Magnesiumoxid zwischen 0,7 und 1 liegt.

3. Türen, Toren, Zargen nach Anspruch 1 oder 2, **dadurch gekennzeichnet, dass** die bindende Phase zu 10-80 Gew.-% aus Magnesiumsulfat, zu 3-40 Gew.-% aus Magnesiumoxid, zu bis zu 10 Gew.-% aus Phosphorsäure, zu 3-50 Gew.-% aus anorganischen Füllstoffen, zu 3-60 Gew.-% aus Wasser, der Rest, sofern vorhanden, aus anorganischen Teilchen, besteht.

4. Türen, Toren, Zargen nach einem der Ansprüche 1 bis 3, **dadurch gekennzeichnet, dass** der bindenden Phase als Härter Oxide und/oder Hydroxide von zwei oder dreiwertigen Metallionen zugesetzt werden.

5. Türen, Toren, Zargen nach einem der voranstehenden Ansprüche, **dadurch gekennzeichnet, dass** die bindende Phase als Füllstoff Kaolin, Kreide, Schiefermehl, Glimmer, Quarz und Ton oder Mischungen davon zwischen 3 und 15 Gew.-% aufweist.

## Claims

1. Doors, gates, frames with cavities that are filled with a hardening, inorganic bonding phase, containing magnesium sulphate-heptahydrate and magnesium oxide at a molar ratio between at least 0.7 and 1.2.

2. Doors, gates, frames according to claim 1, **characterised in that** the molar ratio of magnesium sulphate-heptahydrate and magnesium oxide is between at least 0.7 and 1.

3. Doors, gates, frames according to claim 1 or 2, **characterised in that** the bonding phase consists to 10-80 wt% of magnesium sulphate, 3-40 wt% magnesium oxide, up to 10 wt% of phosphoric acid, to 3-50 wt% of inorganic fillers, to 3-60 wt% of water, the remainder, if existent, of inorganic particles.

4. Doors, gates, frames according to one of claim 1 to 3, **characterised in that** oxides and/or hydroxides of bivalent or trivalent metal ions are added to the bonding phase as hardeners.

5. Doors, gates, frames according to one of the above mentioned claims, **characterised in that** the bonding phase shows kaolin, chalk, slate powder, mica, quartz and clay or mixtures of these between 3 an 15 wt% as filler.

## Revendications

1. Portes, portails, dormants avec cavités comblées avec une phase durcissant anorganique liant, comportant du sulfate de magnésium heptahydrate et de l'oxyde de magnésium selon un rapport molaire compris entre au moins 0,7 et 1.2.

2. Portes, portails, dormants selon la revendication 1, **caractérisés en ce que** le rapport molaire sulfate de magnésium heptahydrate / oxyde de magnésium est compris entre 0,7 et 1.

3. Portes, portails, dormants selon la revendication 1 ou 2, **caractérisés en ce que** la phase liant comporte 10-80% en poids de sulfate de magnésium, 3-40% en poids d'oxyde de magnésium, jusqu'á 10% en poids d'acide phosphorique, 3-50% en poids de matiére de remplissage anorganique, 3-60% d'eau, le reste, si existant, consistant en des particules anorganiques.

4. Portes, portails, dormants selon l'une des revendications 1 à 3, **caractérisés en ce que** de l'oxyde et/ou de l'hydroxyde des iones metallique bivalent ou trivalent est ajouté à la phase liant en guise de durcisseur.

5. Portes, portails, dormants selon l'une des revendications précédentes, **caractérisés en ce que**, en qualité de matière de remplissage, la phase liant comporte entre 3 et 15% en poids de kaolin, de craie, de schiste en poudre, de mica, de quartz et d'argile ou de mélanges de ces matériaux.
